# EUROPÄISCHE PATENTSCHRIFT

(11) **EP 2 205 066 B1**
(45) Veröffentlichungstag und Bekanntmachung des Hinweises auf die Patenterteilung: **06.04.2016**
(21) Anmeldenummer: 08802312.2
(22) Anmeldetag: 17.09.2008
(51) Int. Cl.: A01N 1/02

(54) **TRANSPARENTES KÄLTEGEL**
TRANSPARENT COOLING GEL
GEL REFRIGERANT TRANSPARENT

(30) Priorität: 01.10.2007 DE 102007047040
(43) Veröffentlichungstag der Anmeldung: 14.07.2010
(73) Patentinhaber: Fresenius Kabi Deutschland GmbH, 61352 Bad Homburg (DE)
(72) Erfinder: MÜLLER, Bernd-W., 31224 Peine (DE); SOMMERMEYER, Klaus, 61191 Rosbach v.d.H. (DE)
(86) Internationale Anmeldenummer: PCT/EP2008/007789
(87) Internationale Veröffentlichungsnummer: WO 2009/046820

(56) Entgegenhaltungen:
- WO-A-00/53008
- JP-A- 8 009 966
- US-A1- 2001 049 140
- D.E: PEGG ET AL: "HYPOTHERMIC PERFUSIOIN OF RABBIT KIDNEYS WITH SOLUTIONS CONTAINING GELATIN POLYPEPTIDES" TRANSPLANTATION, Bd. 24, Nr. 1, 1977, Seiten 29-38, XP002552147

## Beschreibung

Die Erfindung betrifft das technische Gebiet der Kühlung von Organen in der Transplantationsmedizin, insbesondere ein Kühlgel.

In der Transplantationsmedizin ist die Kühlung des zu transplantierenden Gewebes bzw. Organs eine gebräuchliche Maßnahme um die Stoffwechselvorgänge herabzusetzen in ihrer Geschwindigkeit und eine Konservierung der Organe zu erreichen. Dabei werden Temperaturen von bis zu -5 °C mit Hilfe von fein zerstoßenen Eispräparationen erreicht. Da unter sterilen Kautelen gearbeitet werden muss, wird dieses fein zerstoßene Eis üblicherweise hergestellt durch Einfrieren steriler isotoner Kochsalzlösung oder 5 %-iger Glucoselösung, welche als Infusionslösungen in Beutelabfüllungen im Handel erhältlich sind.

Der Einfrierungsvorgang erfolgt im Verpackungsmaterial bei Temperaturen < -15 °C im Tiefgefrierschrank. Anschließend wird der erhaltene Eisblock durch Anwendung mechanischer Energie auf den Beutel, wie z.B. Hammerschlag, in einen fein zerstoßenen Eisbrei umgewandelt. Anschließend wird unter sterilen Kautelen das zerkleinerte Eis entnommen und das Organ bzw. das Gewebe damit behandelt.

An das zerstoßene Eis werden weitere Anforderungen gestellt. Zunächst sollte es so fein zerkleinert sein, dass es um den Organbereich herum formbar ist und auch um kleinere Areale gelegt werden kann. Weiterhin sollte beim Aufschmelzen des Eisbreies die entstandene wässrige Lösung möglichst im pH-Wert zwischen 5 und 7 liegen und annähernd isoton sein, also möglichst physiologische Verhältnisse aufweisen, um das Gewebe nicht zu schädigen. Alle enthaltenen Substanzen müssen medizinisch kompatibel sein, so dass der eventuell im Operationsbereich verbleibende Rest der aufgetauten Lösung unbedenklich sind. Letzteres wird erreicht durch das Einfrieren von isotoner, pH-Wert-neutraler, 0,9 %-iger isotoner Kochsalzlösung oder z.B. auch 5 %-iger Glucoselösung, welche auch als Infusionslösungen eingesetzt werden. Nach dem Aufschmelzen solcher Lösungen sind diese physiologisch gut verträglich und schädigen die Organe nicht.

Die oben beschriebenen Eismischungen haben jedoch den Nachteil, dass sie mechanisch nicht optimal sind um z.B. kleine Organareale zu umkleiden, d.h. keine Flexibilität aufweisen.

EP 1 649 842 beschreibt die Verwendung eines Kühlgels zur Kühlung von Organen als Kühlmaterial in einer dafür geeigneten Hülle. Es wird nicht der direkte Kontakt des Kühlgels mit dem Organ beschrieben. Auch wird keine Zusammensetzung offenbart die für einen solchen Zweck besonders geeignet ist.

EP 970 707 beschreibt ein Kühlgel auf Gelatinebasis. Das dort beschriebene Kühlgel wird weder zur Kühlung von Organen eingesetzt, noch ist die Zusammensetzung für eine solche Anwendung adaptiert.

US2001/0049140 beschreibt Gel-basierte Zusammensetzungen, die zur Lagerung und zum Transport von Zellen und Organen geeignet sind. Diese Gelierungsmittel werden in einer Konzentration von 2% verwendet.

Es bestand daher die Aufgabe, eine stark formbare und transparente Kühlpräparation zu finden, die zur Kühlung von Organen in der Transplantationsmedizin geeignet ist, wenn ein direkter Kontakt zwischen dem Organ und der Kühlpräparation hergestellt wird. Die Aufgabe umfasst auch die Herstellung einer solchen Kühlpräparation.

Weiterhin bestand die Aufgabe darin eine vorteilhafte Methode zur Kühlung von Organen vor und während der Transplantation zu finden, die die Nachteile der Kühlung mit gestoßenem Eis, nämlich geringe Formbarkeit und geringe Transparenz, vermeidet.

Aufgaben werden vorteilhaft durch die Methode zur Kühlung eines Organs nach Anspruch 1 sowie das in den Ansprüchen 2 bis 9 beschriebene Verfahren und das daraus resultierende Kühlgel gelöst.

Ein erfindungsgemäßes Kühlgel ist bei Temperaturen zwischen -5 °C bis +4 °C weich und formbar und besitzt bei physiologischer Verträglichkeit auch die notwendige Kältekapazität zur Kühlung der Organ- und Gewebebereiche. Vorteilhafterweise verflüssigt sich ein solches Kühlgel bei Temperaturen > 5 °C und läuft von den Organen nach dem Abtauen leicht ab und ist somit leicht entfernbar. Zweckmäßig enthält das Präparat ausschließlich nicht toxische Bestandteile, so dass, falls Restmengen nach Durchführung der Kühlung im Organismus verbleiben, dieses vollkommen unschädlich ist.

Ein solches Kühlgel besitzt einem Gelatinegehalt von 5 bis 15 Gew.%, vorzugsweise zwischen 6 und 9 Gew.%. Eine solche Zusammensetzung enthält vorteilhafterweise Elektrolyten, die physiologisch verträglich sind, wie Natrium, Kalium, Magnesium, Calcium und Lactat, mindestens isotonisiert sind, gegebenenfalls jedoch auch angereichert sein können bis zu einer Osmolarität von 600 mosmol/kg. Der Gelierbereich bei solchen Gelen liegt dabei idealerweise zwischen 5 °C bis -5 °C. Succinyl-Gelatine ist eine Gelatine, die durch Bersteinsäure quervernetzt wurde. Insbesondere Kühlgele, bei denen Succinyl-Gelatine als Gelatine benutzt wird, weisen deshalb innerhalb des hochrelevanten Temperaturbereiches von -5 °C bis +4 °C eine ideale Mischung aus mechanischer Stabilität sowie guter Formbarkeit auf und besitzen darüber hinaus die eine gute Kühlkapazität.

Ein erfindungsgemäßes Kühlpräparat kann aus einer wässrige Lösungen hergestellt werden, in Plastikbehältnisse abgefüllt und sterilisiert werden, in ähnlicher Weise wie dies der Fall bei den bekannten Gelatinepräparationen der Fall ist, welche eingesetzt werden als Plasmavolumenersatz. In einer bevorzugten Ausführungsform besteht das Kühlpräparat nur aus Gelatine oder Gelatinederivaten, Lactat und Elektrolyten. Elektrolyte sind bevorzugt in folgenden Konzentrationen enthalten: 150 - 300 mmol/l Natrium, 5 - 10 mmol/l Kalium, 1,5 - 3 mmol/l Magnesium, 1,5 - 3 mmol/l Calcium, 100 - 200 mmol/l Chlorid. Lactat ist bevorzugt in der Konzentration 30 - 60 mmol/l enthalten.

Von letzteren Präparationen unterscheiden sich die erfindungsgemäßen Zusammensetzungen durch den wesentlich höheren Gehalt an Gelatine-Derivat und gegebenenfalls auch durch den höheren Gehalt an Elektrolyten.

Die so entstandene wässrige Lösung wird in einen Behälter abgefüllt, wie z.B. Polyethylen- oder PVC-Beutel, und Temperaturen von -8 °C bis 3°C in die transparente Gelform verwandelt werden (z.B. durch Einbringen in einen entsprechend Temperatur-eingestellten Gefrierschrank). Vorzugsweise wird die Gelierung bei Temperaturen von -5 °C bis 1 °C durchgeführt.

Alternativ kann die Präparation bei -10 °C bis -30°C, bevorzugt -15°C bis -20°C, besonders bevorzugt bei ungefähr -18°C tiefgefroren werden und die tiefgefrorenen, harten Präparation, dann auf eine Temperatur von - 5°C oder mehr erwärmt werden und somit in eine gelartige Konsistenz überführt werden. Bei Raumtemperatur wird so innerhalb von ca. 60 Minuten eine mechanisch leicht formbare Struktur angenommen, die transparent ist. Diese Masse kann im Kühlschrank bei Temperaturen von -5°C bis 4°C bis zu 24 Stunden gelagert werden und in dieser Zeitspanne als Kühlpräparation verwendet werden.

Ebenfalls kann eine tiefgefrorene Präparation in einen Kühlschrank von 2 - 8 °C verbracht werden. Diese nimmt dann innerhalb von ca. 12 Stunden eine formbare, transparente Gel-Eis Struktur an, die dann innerhalb der darauf folgenden 24 Stunden ebenfalls als Kühlpräparation verwendet werden kann.

Gelatine ist ein kollagenes Protein. Im Gegensatz zu Gelatine ist im tierischen Körper vorkommendes Kollagen nicht wasserlöslich. Es besteht aus Tripelhelices der kollagenen Proteine, die sich zu Kollagenfibrillen zusammenlagern und so Knochen, Knorpel, Gefäße etc. bilden. Gelatine gewinnt man üblicherweise aus tierischem Kollagen, häufig aus Schweinescharten, aber jede Gelatine aus natürlichem Kollagen ist für die Erfindung geeignet. Bei der Herstellung von Gelatine wird Kollagen zunächst aufgeschlossen und die Triplehelices aufgebrochen. Das kollagene Protein wird so in eine wasserlösliche Form überführt. Bei entsprechend hohen Gelatinekonzentrationen in der Lösung werden die kollagenen Proteine bei geringeren Temperaturen quervernetzt und bilden eine gelartige Konsistenz aus. Die Eigenschaften der natürlichen Gelatine lassen sich ändern, indem der Gelatine eine A-genz zugesetzt wird, das die Vernetzungseigenschaften der Gelatine ändert. Durch den Einsatz solcher Vernetzungsagenzien, wie z.B. Harnstoff oder Bernsteinsäure (Succinylsäure) bzw. dessen Salz, entstehen Gelatine-Derivate.

Die Verwendung von Gelatine oder Gelatinederivaten in medizinischen Lösungen ist von üblichen Plasma- oder Blutvolumenexpandern bekannt. Diese Lösungen können Gelatine-Derivate wie z.B. Succinylgelatine, Oxypolygelatine oder harnstoffvernetzte Gelatinelösungen enthalten, unterscheiden sich aber von den erfindungsgemäßen Präparationen durch den wesentlich geringeren Konzentrationsbereich des Gelatine-Derivates.

Die Erfindung ist für den Fachmann unter der Variation der genannten Parameter für jede physiologisch verträgliche quervernetze Gelatine ausführbar. Überraschenderweise wurde jedoch festgestellt, dass Succinylgelatine, verglichen mit natürlicher Gelatine, harnstoffvernetzter Gelatine oder Oxypolygelatine, besonders geeignet ist, mechanisch ausreichende Gele bei tiefen Temperaturen zu bilden. Solche Kühlpräparate auf Succinylgelatinebasis weisen im Vergleich zu Kühlpräparaten mit anderen Gelatinen oder deren Derivaten einen besonders breiten relevanten Temperaturbereich auf in dem der gelförmige Zustand einen idealen Kompromiss zwischen Formbarkeit und mechanischer Stabilität für die Zwecke der Kühlung von Organen durchläuft.

Kühlgele auf Succinylgelatinebasis weisen im relevanten Temperaturbereich von - 5°C bis +5°C auch eine ausgezeichnete Kühlkapazität auf. Der Begriff Succinylgelatine beschreibt ein mit Bernsteinsäure oder dessen Salz oder Bernsteinsäureanhydrid vernetztes Gelatinederivat, synonym wird auch der Begriff Gelatinesuccinat verwendet.

Die erfindungsgemäßen Präparationen sollten idealerweise bei Raumtemperatur ausreichend flüssig sein, damit sie aus dem gekühlten Organareal wieder leicht entfernt werden können. Außerdem bietet die flüssige Phase bei Raumtemperatur den Vorteil, dass solche Lösungen leichter abgefüllt bzw. hergestellt werden können.

Konzentrationen an Gelatine unter 3 %, wie sie handelsübliche Gelatine-Infusionslösungen als Plasmavolumenexpander aufweisen, führen beim Einfrieren nicht zu Gelen mit der gewünschten mechanischen Stabilität bzw. bilden in Abhängigkeit ihrer chemischen Struktur teilweise nur schwierig Gele. Solche Präparate gehen zu schnell, d.h. innerhalb eines nur kleinen Temperaturbereichs, von einem hoch formbaren aber mechanisch nicht ausreichend stabilen Zustand in einen mechanisch hoch stabilen nicht formbaren Zustand über.

Der Elektrolytzusatz zur Herstellung blutisotoner Verhältnisse setzt gleichzeitig den Kristallisationspunkt des Eises herab, was neben der Herstellung physiologischer Verhältnisse ein erwünschter Effekt ist, da das Einsetzen der Eiskristallisation das Gel intransparent und hart macht.

Die Osmolalität kann dabei durch Elektrolytzusatz bis zu 650 mosmol/kg eingestellt werden, da ein solcher Bereich noch akzeptabel ist für Infusionen, die in eine periphere Vene injiziert werden, bevorzugt wird eine Osmolalität im Bereich von 280-600, besonders bevorzugt wird ein Bereich von 400-550 mosmol/kg. Damit kann gleichzeitig der Kristallisationspunkt des Eises entsprechend eingestellt werden.

Ganz besonders bevorzugt sind Gelatinepräparationen mit Gelatinesuccinat mit einer Konzentration > 3 %. Dieses Gelatine-Derivat bildet mechanisch ausreichend stabile Gele schon bei relativ niedrigen Konzentrationen im Vergleich zu Oxypolygelatine-Derivaten und harnstoffvernetzten Gelatine-Präparaten.

Die Festigkeit der Gelatinepräparationen kann durch einen physiologischen Zusatz von Magnesium oder Calcium erhöht werden bis zu einem Gehalt von 3 mmol/l. Die bevorzugten Lösungen können hergestellt werden aus Photogelatine, obwohl alle natürlichen Gelatinen und deren Derivate geeignet sind. Bevorzugt sind Gelatinen oder Gelatinederivate mit einem mittleren Molekulargewicht von 25-45 kD. Diese werden in Wasser für Injektionszwecke aufgelöst und gegebenenfalls thermisch abgebaut, danach mit Bernsteinsäureanhydrid vernetzt bzw. derivatisiert.

Die Lösungen können mit Hilfe von Wasserstoffperoxid entpyrogenisiert werden.

Nach Zusatz der Elektrolyte zur Herstellung isotonischer Verhältnisse bzw. von Calcium oder Magnesium wird idealerweise die Lösung sterilfiltriert, in Plastikbehältnisse abgefüllt und/oder hitzesterilisiert.

### Beispiele

### Beispiel 1

500 ml einer 3 %-igen Lösung von Gelatine-Succinat mit 150 mmol/l Natrium, 5 mmol/l Kalium, 1,5 mmol/l Magnesium, 100 mmol/l Chlorid und 30 mmol/l Lactat, werden in einen Gefrierschrank, der auf -18 °C eingestellt ist, verbracht. Die Lösung mit Succinyl-Gelatine ist nach 2,5 Stunden in ein transparentes Gel umgewandelt. Das aus der Succinyl-Gelatine erhaltene Gel ist stark formbar und weist geringe mechanische Stabilität auf, das entstandene Gel neigt noch leicht zum Fließen. Bei längerer Zeit im Gefrierschrank steigt die mechanische Stabilität langsam.

### Beispiel 2

Eine 6- bzw. 9 %-ige wässrige Lösung Succinyl-Gelatine mit den Elektrolytkonzentrationen 300 mmol/l Natrium, 10 mmol/l Kalium, 3 mmol/l Magnesium, 200 mmol/l Chlorid und 60 mmol/l Lactat werden in einen Gefrierschrank mit -18 °C verbracht und die Gelbildung über die Zeit verfolgt.

Die 9 %-ige Lösung wird nach ca. 1 Stunde gelartig, während die 6 %-ige Lösung erst nach 2 Stunden ein Gel ausbildet. Beide Gele werden nach 2,5 Stunden aus dem Gefrierschrank entnommen und die Temperatur im Zeitverlauf verfolgt, mit folgenden Ergebnissen.

| **T** | **6 %-iges Gel** | **9 %-iges Gel** |
|---|---|---|
| T = 0 | -5 °C | -5 °C |
| T = 1 h | -2,5 °C | -3,5 °C |
| T = 2 h | -2 °C | -3,5 °C |
| T = 3 h | -1 °C | -3,5 °C |
| T = 4 h | 0 °C | 0 °C |

Beide Gele sind mechanisch stabil mit kaum Tendenz zum Fließen.

## Patentansprüche

1. Methode zur Kühlung eines Organs vor oder während der Transplantation durch das direkte Kontaktieren des Organs mit einem Kühlgel, das 5 bis 15 % Gelatine oder Gelatinederivat enthält.

2. Verfahren zur Herstellung eines Kühlgels durch Abkühlen einer Lösung, die 5 bis 15 % Gelatine oder Gelatinederivat enthält und einen Gehalt an physiologisch verträglichen Elektrolyten sowie eine Osmolarität von 280 bis 650 mosmol/l aufweist, auf eine Temperatur von unter -1 °C bis die wässrige Lösung in einen mechanisch stabilen, formbaren Gelzustand übergeht.

3. Verfahren zur Herstellung eines Kühlgels durch Tiefgefrieren einer Lösung, die 5 bis 15 % Gelatine oder Gelatinederivat enthält und einen Gehalt an physiologisch verträglichen Elektrolyten sowie eine Osmolarität von 280 bis 650 mosmol/l aufweist, bei einer Temperatur zwischen -10 °C und -30 °C und dem späteren Erwärmen des Präparats auf eine Temperatur von ≥ -5 °C bis die hart gefrorene Lösung in einen mechanisch stabilen, formbaren Gelzustand übergeht.

4. Verfahren nach Anspruch 2 oder 3, wobei es sich bei der Gelatine oder dem Gelatinederivat um harnstoffvernetzte Gelatine, Oxypolygelatine oder Succinylgelatine handelt.

5. Verfahren nach einem der Ansprüche 2 bis 4, wobei die Gelatine oder das Gelatinederivat ein mittleres Molekulargewicht von 25 bis 45 kD, vorzugsweise 30 bis 40 kD aufweist.

6. Verfahren nach einem der Ansprüche 2 bis 5, wobei die Lösung 6 bis 9 % Gelatine oder Gelatinederivat enthält.

7. Verfahren nach einem der Ansprüche 2 bis 6, wobei die Lösung 150 bis 300 mmol/l Natrium, 5 bis 10 mmol/l Kalium, 1,5 bis 3 mmol/l Magnesium, 1,5 bis 3 mmol/l Calcium, 100 bis 200 mmol/l Chlorid und 30 bis 60 mmol/l Lactat enthält.

8. Verfahren nach einem der Ansprüche 2 bis 7, wobei die Lösung steril und pyrogenfrei ist.

9. Verfahren nach einem der Ansprüche 2 bis 8 mit den zusätzlichen vorgelagerten Verfahrensschritten der Sterilfiltration der Lösung und/oder Sterilisation der Lösung.

10. Kühlgel hergestellt nach einem Verfahren nach einem der Ansprüche 2 bis 9.

## Claims

1. The method of cooling an organ before or during transplantation by directly contacting the organ with a cooling gel comprising 5 to 15% of gelatin or of a gelatin derivative.

2. Process for preparing a cooling gel by cooling a solution comprising 5 to 15% of gelatin or of a gelatin derivative and having a content of physiologically acceptable electrolyte and also an osmolarity of 280 to 650 mosmol/l down to a temperature of below -1°C until the aqueous solution transitions into a gel state that is mechanically stable, formable.

3. Process for preparing a cooling gel by deep-freezing a solution comprising 5 to 15% of gelatin or of a gelatin derivative and having a content of physiologically acceptable electrolyte and also an osmolarity of 280 to 650 mosmol/l at a temperature between -10°C and -30°C and subsequently warming the preparation to a temperature of ≥ -5°C until the hard-frozen solution transitions into a gel state that is mechanically stable, formable.

4. Process according to Claim 2 or 3, wherein the gelatin or the gelatin derivative is urea-crosslinked gelatin, oxypolygelatin or succinylgelatin.

5. Process according to any of Claims 2 to 4, wherein the gelatin or the gelatin derivative has an average molecular weight of 25 to 45 kD, preferably 30 to 40 kD.

6. Process according to any of Claims 2 to 5, wherein the solution comprises 6 to 9% of gelatin or of a gelatin derivative.

7. Process according to any of Claims 2 to 6, wherein the solution comprises 150 to 300 mmol/l of sodium, 5 to 10 mmol/l of potassium, 1.5 to 3 mmol/l of magnesium, 1.5 to 3 mmol/l of calcium, 100 to 200 mmol/l of chloride and 30 to 60 mmol/l of lactate.

8. Process according to any of Claims 2 to 7, wherein the solution is sterile and pyrogen-free.

9. Process according to any of Claims 2 to 8, further comprising the upstream steps of sterile-filtering the solution and/or sterilizing the solution.

10. Cooling gel obtained by a process according to any of Claims 2 to 9.

## Revendications

1. Méthode de refroidissement d'un organe avant ou pendant la transplantation par mise en contact directe de l'organe avec un gel réfrigérant qui contient 5 à 15 % de gélatine ou d'un dérivé de gélatine.

2. Procédé de fabrication d'un gel réfrigérant par refroidissement d'une solution qui contient 5 à 15 % de gélatine ou d'un dérivé de gélatine et qui présente une teneur en électrolytes physiologiquement compatibles et une osmolarité de 280 à 650 mosmol/l, à une température de moins de -1 °C jusqu'à ce que la solution aqueuse passe à un état de gel façonnable mécaniquement stable.

3. Procédé de fabrication d'un gel réfrigérant par congélation à basse température d'une solution qui contient 5 à 15 % de gélatine ou d'un dérivé de gélatine et qui présente une teneur en électrolytes physiologiquement compatibles et une osmolarité de 280 à 650 mosmol/l, à une température comprise entre -10 °C et -30 °C, et chauffage ultérieur de la préparation à une température ≥ -5 °C jusqu'à ce que la solution congelée dure passe à un état de gel façonnable mécaniquement stable.

4. Procédé selon la revendication 2 ou 3, dans lequel la gélatine ou le dérivé de gélatine consiste en de la gélatine réticulée par de l'urée, de l'oxypolygélatine ou de la succinylgélatine.

5. Procédé selon l'une quelconque des revendications 2 à 4, dans lequel la gélatine ou le dérivé de gélatine présente un poids moléculaire moyen de 25 à 45 kD, de préférence de 30 à 40 kD.

6. Procédé selon l'une quelconque des revendications 2 à 5, dans lequel la solution contient 6 à 9 % de gélatine ou de dérivé de gélatine.

7. Procédé selon l'une quelconque des revendications 2 à 6, dans lequel la solution contient 150 à 300 mmol/l de sodium, 5 à 10 mmol/l de potassium, 1,5 à 3 mmol/l de magnésium, 1,5 à 3 mmol/l de calcium, 100 à 200 mmol/l de chlorure et 30 à 60 mmol/l de lactate.

8. Procédé selon l'une quelconque des revendications 2 à 7, dans lequel la solution est stérile et exempte de substances pyrogènes.

9. Procédé selon l'une quelconque des revendications 2 à 8, comprenant les étapes de procédé supplémentaires en amont de filtration stérile de la solution et/ou de stérilisation de la solution.

10. Gel réfrigérant fabriqué par un procédé selon l'une quelconque des revendications 2 à 9.
